# EUROPÄISCHE PATENTSCHRIFT

(11) **EP 2 426 003 B1**
(45) Veröffentlichungstag und Bekanntmachung des Hinweises auf die Patenterteilung: **06.03.2013**
(21) Anmeldenummer: 11401581.1
(22) Anmeldetag: 24.08.2011
(51) Int. Cl.: B60K 37/06, B60Q 1/00, H01C 10/38, H01C 10/14, G05G 1/00, H01H 5/02

(54) **Drehstelleinheit zum manuellen Bedienen von Kraftfahrzeugkomponenten**
Manual rotary control switch for operating motor vehicle components
Unité de commande manuelle rotative pour composants de véhicule automobile

(30) Priorität: 07.09.2010 DE 102010037381
(43) Veröffentlichungstag der Anmeldung: 07.03.2012
(73) Patentinhaber: Huf Hülsbeck & Fürst GmbH & Co. KG, 42551 Velbert (DE)
(72) Erfinder: Schlag, Otmar, 45149 Essen (DE)

(56) Entgegenhaltungen:
- EP-A1- 1 621 953
- EP-A2- 1 630 038
- DE-A1- 19 944 463

## Beschreibung

Die Erfindung betrifft eine Drehstelleinheit zum manuellen Bedienen von Kraftfahrzeugkomponenten, mit deren Hilfe insbesondere ein Fahrer eines Kraftfahrzeugs einen Drehschalter einer in einer Kraftfahrzeugkonsole eingelassenen Drehstelleinheit verdrehen kann, um beispielsweise verschiedene Leuchtmittel von Kraftfrzeugleuchten ein- und/oder auszuschalten.

Aus DE 10 2008 031 685A1 ist eine Drehstelleinheit zum Bedienen von Kraftfahrzeugkomponenten bekannt, bei der ein drehbarer Schalter manuell gedreht werden kann. Der Drehschalter ist mit einer Drehwelle verbunden, deren Drehwinkel mit Hilfe eines Potentiometers gemessen werden kann, wobei das Potentiometer auf einer zum Drehschalter weisenden Vorderseite einer Leiterplatine der Drehstelleinheit befestigt ist.

EP 1 630 038 A2 offenbart ein Drehstelleinheit zum manuellen Bedienen von Kraftfahrzeugkomponenten, insbesondere von Kraftfahrzeugleuchten, mit einem mit einer Drehwelle verbundenen drehbaren Drehschalter zum manuellen Drehen, einer Leiterplatine zur Bereitstellung einer Bedienelektronik wobei die Leiterplatine eine zum Drehschalter weisende Vorderseite und eine von der Vorderseite wegweisende Rückseite aufweist, einem mit der Vorderseite der Leiterplatine befestigten ersten Potentiometer zum Messen der Drehstellung der Drehwelle.

Insbesondere bei der manuellen Bedienung von sicherheitsrelevanten Kraftfahrzeugkomponenten ist es wichtig, die Funktionalität aufrechtzuerhalten, wobei gleichzeitig die zusätzliche Sicherheit nicht durch erhebliche Mehrkosten realisiert werden soll.

Es ist die Aufgabe der Erfindung, eine Drehstelleinheit zur manuellen Bedienung von Kraftfahrzeugkomponenten zu schaffen, die eine erhöhte Funktionssicherheit ermöglicht und kostengünstig hergestellt werden kann.

Die Lösung der Aufgabe erfolgt erfindungsgemäß durch die Merkmale des Anspruchs 1. Bevorzugte Ausgestaltungen der Erfindung sind in den Unteransprüchen angegeben.

Die erfindungsgemäße Drehstelleinheit zur manuellen Bedienung von Kraftfahrzeugkomponenten, insbesondere von Kraftfahrzeugleuchten, weist einen mit einer Drehwelle verbundenen drehbaren Drehschalter zum manuellen Drehen auf. Ferner ist eine Leiterplatine zur Bereitstellung eine Bedienelektronik vorgesehen, wobei die Leiterplatine eine zum Drehschalter weisende Vorderseite und eine von der Vorderseite wegweisende Rückseite aufweist. Mit der Vorderseite der Leiterplatine ist ein erstes Potentiometer zum Messen der Drehstellung der Drehwelle befestigt. Erfindungsgemäß ist mit der Rückseite der Leiterplatine ein zweites Potentiometer zum Messen der Drehstellung der Drehwelle befestigt.

Durch die mindestens zwei Potentiometer kann die Drehstellung der Drehwelle redundant gemessen werden, so dass Schaltstellungen zum Auslösen bestimmter Funktionen der Kraftfahrzeugkomponenten sicherer ermittelt werden können. Insbesondere ist es möglich, durch einen Vergleich der von den mindestens zwei Potentiometern bereitgestellten Ausgangssignale einen Defekt, insbesondere einen Defekt eines Potentiometers, festzustellen, wodurch ein entsprechendes Warnsignal und/oder eine entsprechende Warnmeldung ausgelöst werden kann. Dadurch, dass das erste Potentiometer mit der Vorderseite der Leiterplatine und das zweite Potentiometer mit der Rückseite der Leiterplatine befestigt ist, können die beiden Potentiometer einander gegenüberliegend angeordnet sein, so dass in einem Bereich der Leiterplatine, in dem auf Grund des befestigten ersten Potentiometers sowieso keine weiteren elektronischen Bauteile vorgesehen sind, auch das zweite Potentiometer mit der Leiterplatine befestigt werden kann. Insbesondere ist es möglich, das zweite Potentiometer in einem Kühlspalt zwischen der Leiterplatine und einer Gehäusewand der Drehstelleinheit zu positionieren, so dass durch das zusätzliche redundante Potentiometer der Bauraumbedarf der Drehstelleinheit nicht wesentlich erhöht ist. Gleichzeitig ist es möglich, dass sowohl das erste Potentiometer als auch das zweite Potentiometer jeweils voneinander wegweisende Stirnflächen aufweisen, über die durch ohmsche Leitungsverluste verursachte Wärme durch natürliche Konvektion abgeführt werden kann. Zusätzlich oder alternativ können die Potentiometer über ihre Mantelfläche gekühlt werden. Insbesondere kann die Leiterplatine zwischen dem ersten Potentiometer und dem zweiten Potentiometer als Wärmebarriere wirken, so dass ein gegenseitiges Erwärmen der Potentiometer vermieden ist. Durch die vergleichsweise gute Kühlung der Potentiometer kann ein ohmscher Widerstand im ersten Potentiometer und/oder im zweiten Potentiometer gering gehalten werden. Insbesondere können das erste Potentiometer und das zweite Potentiometer mit Hilfe abstehender Zapfen verdrehsicher auf die Leiterplatine aufgesteckt und einfach befestigt werden. Dies führt zu einer einfachen und kostengünstigen Herstellung der Drehstelleinheit. Ferner ist es möglich, die Drehwelle des Drehschalters über eine Wellenöffnung in der Leiterplatine durch die Leiterplatine hindurch zuführen, so dass die Drehwelle in der Wellenöffnung abgestützt und/oder gelagert werden kann. Dies erleichtert eine mechanische Kopplung der Drehwelle mit den Potentiometern, ohne dass unnötig hohe Biegemomente innerhalb der Drehwelle auftreten können. Die Drehwelle kann dadurch aus einem kostengünstigen Material hergestellt werden und/oder einen geringeren Durchmesser aufweisen, ohne dass bei der Bedienung der Drehstelleinheit eine Beschädigung zu befürchten ist. Die Bedienelektronik der Leiterplatine kann teilweise oder vollständig die elektrischen Komponenten bereitstellen, um die Drehposition des Drehschalters zu messen und in Abhängigkeit von der Drehposition des Drehschalters Signale an die angeschlossenen Kraftfahrzeugkomponenten auszusenden beziehungsweise von den angeschlossenen Kraftfahrzeugkomponenten zu empfangen. Die Bedienelektronik kann geeignet miteinander verschaltete Widerstände, Spulen, Kondensatoren, Transistoren, Schalter, flüchtige Speicher, Permanentspeicher, Vergleicheinheiten, Recheneinheiten etc. aufweisen.

Insbesondere ist das erste Potentiometer relativ zu dem zweiten Potentiometer in Umfangsrichtung der Drehwelle verdreht angeordnet, wobei ein Verdrehwinkel α einer Nullstellung des ersten Potentiometers zu einer Nullstellung des zweiten Potentiometers, insbesondere 5° ≤ α ≤175°, vorzugsweise 30° ≤ α ≤ 160°, weiter bevorzugt 60° ≤ α ≤ 120° und besonders bevorzugt α = 90° ± 10° beträgt. In der Nullstellung der Potentiometer kann ein Messsignal abgegriffen werden, das im Vergleich zu den übrigen abgreifbaren Messsignalen einen betragsmäßig minimalen Wert aufweist, wobei der minimale Wert Null oder von Null verschieden sein kann. Durch die in Umfangsrichtung verdrehte Anordnung der Potentiometer zueinander können Messungenauigkeiten, beispielsweise bei einem Nulldurchgang, ausgeglichen werden. Ferner können gegebenenfalls vorhandene Nichtlinearitäten und/oder Proportionalitätsfehler kompensiert werden. Die unterschiedlichen Stellsignale der Potentiometer können durch eine Offset-Korrektur berücksichtigt werden. Insbesondere kann die Offset-Korrektur nach der Montage der Drehstelleinheit bei einer erstmaligen Inbetriebnahme initialisiert werden, so dass auch Einbautoleranzen durch die Offset-Korrektur kompensiert werden können.

Vorzugsweise weist das erste Potentiometer und/oder das zweite Potentiometer wenigstens zwei unabhängige Messausgänge zur redundanten Messung der Drehstellung der Drehwelle auf. Die beiden Messausgänge weisen insbesondere eine Phasendifferenz von 180° ± 5° oder von 90° ± 5° auf. Durch die zwei Messausgänge kann für das jeweilige Potentiometer eine redundante Messung des Messsignals erfolgen. Wenn das vom ersten Potentiometer ausgegebene Messsignal signifikant von dem Messsignal abweicht, das von dem zweiten Potentiometer ausgegeben wird, ist es möglich, die Signale der mindestens zwei Messausgänge eines Potentiometers miteinander zu vergleichen, um das defekte Potentiometer identifizieren zu können. Dies erleichtert die Fehlersuche und Reparatur der Drehstelleinheit. Reparaturkosten können dadurch reduziert werden. Eine derartige Fehlerdiagnose kann auch durch automatische oder manuell initiierte Abfragen über einen Datenbus des Kraftfahrzeugs, insbesondere CAN-Bus, durchgeführt werden, ohne die Drehstelleinheit vorher ausbauen zu müssen.

Besonders bevorzugt ist der Drehschalter in unterschiedlichen Drehpositionen lösbar feststellbar, wobei zwei benachbarte Drehpositionen einen Mindestabstand βₘᵢₙ von insbesondere 10° ≤ β ₘᵢₙ ≤ 60°, vorzugsweise 15° ≤ βₘᵢₙ ≤ 45° und besonders bevorzugt 20° ≤ βₘᵢₙ ≤ 30° aufweisen. Der Drehschalter kann beispielsweise mit Hilfe eines federbelasteten Stifts festgestellt sein, der in eine korrespondierende Vertiefung eingreift, wenn eine bestimmte Drehposition erreicht ist. Der Stift ist beispielsweise mit Hilde eines gerundeten Kopfes derart ausgestaltet, dass der Drehschalter von Hand weiterbewegt werden kann, so dass der Stift nach Überwindung einer Gegenkraft aus der korrespondierenden Vertiefung herausgleiten kann. Die verschiedenen Drehpositionen können verschiedenen beabsichtigten Schaltzuständen entsprechen. Beispielsweise kann in einem ersten Schaltzustand ein Abblendlicht des Kraftfahrzeugs eingeschaltet werden, wobei in einem zweiten Schaltzustand sowohl das Abblendlicht als auch ein Fernlicht eingeschaltet erden soll. Die Messgenauigkeit der verwendeten Potentiometer sowie die Fertigungstoleranzen der Kopplungsmechanik können in Abhängigkeit von dem Mindestabstand βₘᵢₙ gewählt sein. Prinzipiell ist bereits eine Genauigkeit ausreichend, welche das Erreichen der verschiedenen Drehpositionen sicher detektiert. Eine Auflösung, welche die Detektion mehrerer Zwischenstationen des Drehschalters ermöglicht, ist nicht notwendig. Es ist dadurch möglich die Fertigungs- und Montagetoleranzen im Wesentlichen allein am Bedienkomfort auszurichten.

Insbesondere ist das erste Potentiometer und/oder das zweite Potentiometer mit einem Spiel S in Umfangsrichtung der Drehwelle mit der Drehwelle gekoppelt, wobei das Spiel S insbesondere 1°≤ S ≤5°, vorzugsweise 2°≤ S ≤12°, weiter bevorzugt 3°≤ S ≤9° und besonders bevorzugt 4°≤ S ≤7° beträgt. Bei einem derartigen zulässigen Spiel können die Drehwellen sowie die mechanischen Komponenten der Potentiometer mit entsprechend geringen Toleranzanforderungen kostengünstig hergestellt werden. Das Spiel ist insbesondere derart gewählt, dass verschiedene unbeabsichtigte Drehstellungen des Drehschalters noch sicher detektiert werden können.

Vorzugsweise sind das erste Potentiometer und das zweite Potentiometer mit einer Rechnereinheit zur Bereitstellung einer aktiven Offset-Korrektur verbunden. Durch die aktive Offset-Korrektur kann ein durch mechanische und/oder elektrische Toleranzen resultierendes Spannungsoffset kompensiert werden. Dies kann beispielsweise während der Montage der Drehstelleinheit bei einer Endmontageprüfung vorgenommen werden. Montagetoleranzen können dadurch automatisch ausgeglichen werden. Gleichzeitig ist es möglich, das einmal kompensierte Spannungsoffset zu überwachen. Falls das überwachte Spannungsoffset aus einem definierten Toleranzfeld herausfallen sollte, kann dies einen Defekt der Drehstelleinheit indizieren. Dies ermöglicht zusätzliche Überwachungs- und Kontrollmöglichkeiten des ordnungsgemäßen Betriebs der Drehstelleinheit.

In einer bevorzugten Ausführungsform sind das erste Potentiometer und das zweite Potentiometer als Gleichteile ausgestaltet. Das erste Potentiometer und das zweite Potentiometer können gleichartig mit einem im Wesentlichen identischen Aufbau ausgebildet sein, so dass die Herstellkosten reduziert werden können. Dies ermöglicht es mehrere gleiche Potentiometer zu verwenden, wobei die Potentiometer nur unterschiedlich relativ zur Leiterplatte angeordnet werden brauchen.

Insbesondere weist die Leiterplatine eine Wellenöffnung zum Hindurchführen der Drehwelle auf, wobei die Wellenöffnung im Wesentlichen im Flächenschwerpunkt der Vorderseite der Leiterplatine vorgesehen ist. Bei einer im Wesentlichen rechteckförmigen Leiterplatine kann die Wellenöffnung somit im Wesentlichen mittig angeordnet sein, und im Wesentlichen zur Oberkante und Unterkante einerseits und zur rechten Kante und linken Kante andererseits einen im wesentlichen gleichen Abstand aufweisen. Mechanische Belastungen auf die Leiterplatine durch die Drehwelle des Drehschalters beim manuellen Betätigen der Drehstelleinheit können dadurch über die Leiterplatine leichter abgetragen werden. Insbesondere kann eine im Wesentlichen symmetrische Belastung der Leiterplatine erreicht werden, durch die die Gefahr eines Knickens der Leiterplatine reduziert ist.

Vorzugsweise ist die Drehwelle in axialer Richtung relativ zum ersten Potentiometer und/oder zum zweiten Potentiometer bewegbar mit dem ersten Potentiometer und/oder mit dem zweiten Potentiometer gekoppelt. Die Drehwelle kann drehfest ab axial verschiebbar mit dem ersten Potentiometer und/oder mit dem zweiten Potentiometer gekoppelt sein. Dies ermöglicht es durch ein Herausziehen und/oder ein Hereinstecken des Drehschalters innerhalb der Drehstelleinheit zusätzliche Funktionen zu schalten. Beispielsweise kann unabhängig von einem eingeschalteten Abblendlicht und/oder Fernlicht durch ein Herausziehen oder Hereinstecken des Drehschalters eine Nebelschlussleuchte eingeschaltet und/oder ausgeschaltet werden. Die Drehwelle kann hierzu beispielsweise eine radial abstehende Nase aufweisen, die in eine korrespondierende Vertiefung des jeweiligen Potentiometers eingreifen kann, wobei die Nase in der korrespondierenden Vertiefung axial bewegbar ist. Insbesondere weist die Drehwelle ein eckiges Querschnittsprofil auf beispielsweise viereckig, so dass entsprechend einfach eine drehfeste Verbindung mit dem jeweiligen Potentiometer hergestellt werden kann. Durch die fehlende axiale Fixierung der Drehwelle relativ zu den Potentiometern kann die Montage vereinfacht werden. Es ist möglich zunächst die Leiterplatine mit den Potentiometern bereitzustellen beispielsweise in einer Gehäuseunterseite der Drehstelleinheit einzusetzen und die Drehwelle axial in die Potentiometer einzusetzen. Die Drehwelle kann beim Einsetzen in die Potentiometer bereits mit dem Drehschalter verbunden sein kann, wobei der Drehschalter bereits mir einem Gehäuseoberteil der Drehstelleinheit drehbar verbunden sein kann. Die einzelnen Teile des Gehäuses der Drehstelleinheit und/oder der Drehschalter und/oder die Drehwelle können aus einem Kunststoffmaterial kostengünstig, insbesondere durch Kunststoffspritzguss, hergestellt sein.

Besonders bevorzugt sind die Ausgangssignale des ersten Potentiometers und/oder des zweiten Potentiometers mit Hilfe eines A/D-Wandlers mit maximal 10 Bit, insbesondere mit maximal 9 Bit, vorzugsweise mit maximal 8 Bit und besonders bevorzugt mit maximal 7 Bit codierbar. Insbesondere, wenn der maximale Drehwinkelbereich des Drehschalters begrenzt ist, beispielsweise auf maximal 230°, ist ein entsprechend geringer Codieraufwand für die Ausgangssignale ausreichend, um im relevanten Drehwinkelbereich die Drehstellung der Drehwelle messen zu können. Die zu verarbeitende Datenmenge der Drehstelleinheit kann dadurch gering gehalten werden. Insbesondere ist die Drehstelleinheit mit einem Datenbus des Kraftfahrzeugs, insbesondere CAN-Bus, verbunden, so dass die digitalisierten Messsignale einfach weiterverarbeitet werden können. Ferner kann die Leiterplatine eine interne Recheneinheit aufweisen, welche die digitalisierten Signale der Potentiometer verarbeiten kann, um verschiedene beabsichtigte Schaltzustände der Kraftfahrzeugkomponenten feststellen zu können. Die interne Recheneinheit kann in Abhängigkeit der Berechnungen verschiedener Funktionalitäten der angeschlossenen Kraftfahrzeugkomponenten auslösen und/oder steuern.

Mit der Leiterplatine kann mindestens ein Signalelement, beispielsweise eine LED, verbunden sein, um verschiedene eingestellte Schaltzustände des Drehschalters, vorzugsweise optisch anzuzeigen. Insbesondere können für verschiedene Schaltzustände verschiedene Farben verwendet werden. Durch ein derartiges Signal erhält ein Bediener der Drehstelleinheit ein Feedback, ob der gewünschte Schaltzustand der Kraftfahrzeugkomponente eingestellt ist. Zusätzlich oder alternativ kann ein Feedback akustisch und/oder haptisch bereitgestellt werden.

Die Erfindung betrifft ferner eine Kraftfahrzeugkonsole für ein Kraftfahrzeug, das eine Drehstelleinheit zum manuellen Bedienen von Kraftfahrzeugkomponenten aufweist, wobei die Drehstelleinheit wie vorstehend beschrieben aus- und weitergebildet sein kann. Die Drehstelleinheit weist insbesondere ein Gehäuse auf, das mit einem Konsolenkörper der Kraftfahrzeugkonsole lösbar oder unlösbar verbunden ist. Die Drehstelleinheit kann beispielsweise mit dem Konsolenkörper verschraubt und/oder verclipst sein. Das Gehäuse der Drehstelleinheit weist insbesondere eine zum Kraftfahrzeuginnenraum weisende Außenfläche auf, die oberflächenbündig in den Formverlauf der Kraftfahrzeugkonsole integriert ist.

Die Erfindung betrifft ferner ein Kraftfahrzeug mit einer Kraftfahrzeugkonsole, die wie vorstehend beschrieben, aus- und weitergebildet sein kann, wobei die Drehstelleinheit der Kraftfahrzeugkonsole von einem Fahrer des Kraftfahrzeugs bedienbar ist. Die Drehstelleinheit ist insbesondere mit mindestens einer Kraftfahrzeugleuchte verbunden, um mindestens ein Leuchtmittel der Kraftfahrzeugleuchte ein- und/oder ausschalten zu können. Insbesondere kann mit der Drehstelleinheit ein Nebelscheinwerfer, eine Nebelschlussleuchte, eine Lichtautomatik, ein Standlicht und/oder ein Fahrlicht bedient werden. Zusätzlich oder alternativ kann mit Hilfe der Drehstelleinheit eine Leuchtweite des Fahrlichts und/oder eine Instrumentenbeleuchtung gedimmt werden.

Nachfolgend wird die Erfindung unter Bezugnahme auf die anliegenden Zeichnungen anhand bevorzugter Ausführungsbeispiele exemplarisch erläutert. Es zeigen:
- Fig. 1:: eine schematische Schnittansicht einer erfindungsgemäßen Drehstelleinheit,
- Fig. 2:: eine schematische Vorderansicht einer Leiterplatine der Drehstelleinheit aus Fig. 1,
- Fig. 3:: eine schematische Rückansicht der Leiterplatine der Drehstelleinheit aus Fig. 1 und
- Fig. 4:: ein schematisches Schaltbild einer Potentiometerschaltung für die in Fig. 2 und Fig. 3 dargestellte Leiterplatine.

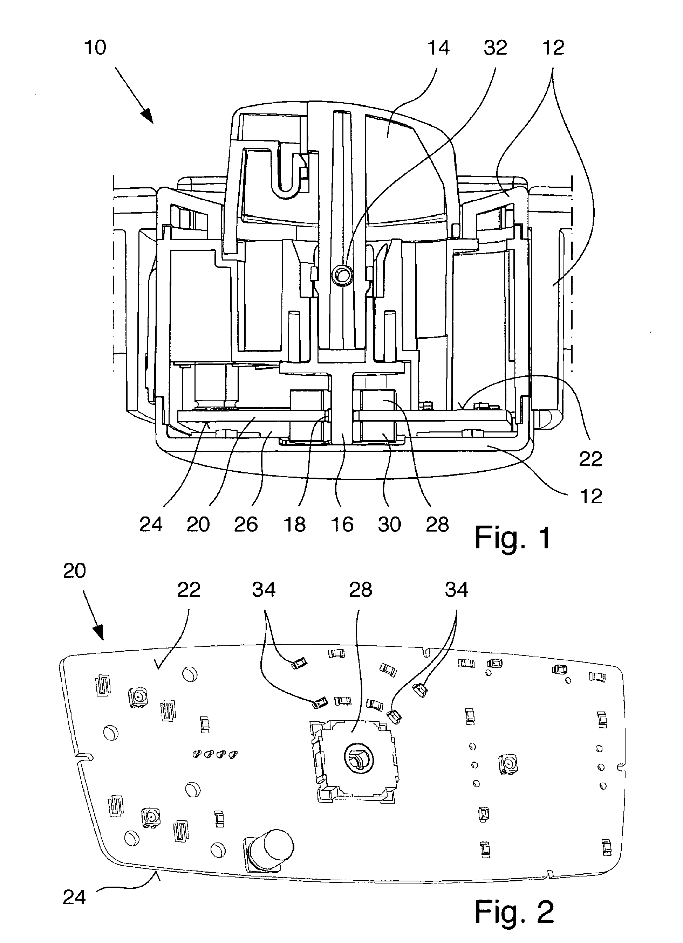

Die in Fig. 1 dargestellte Drehstelleinheit 10 weist ein mehrteiliges Gehäuse 12 auf, das in eine nicht dargestellte Kraftfahrzeugkonsole eingesetzt werden kann. Von dem Gehäuse 12 ist ein drehbarer Drehschalter 14 aufgenommen, mit dem eine Drehwelle 16 verbunden ist. Die Drehwelle 16 kann mit dem Drehschalter 14 reibschlüssig mit Presspassung verklemmt sein. Die Drehwelle 16 ist durch eine Wellenöffnung 18 einer Leiterplatine 20 hindurchgeführt. Die Leiterplatine 20 weist eine zum Drehschalter 14 weisende Vorderseite 22 und eine vom Drehschalter 14 wegweisende Rückseite 24 auf. Zwischen der Rückseite 24 der Leiterplatine 20 und dem Gehäuse 12 ist ein Kühlspalt 26 ausgebildet, um die elektrischen Komponenten der Leiterplatine 20 durch natürliche Konvektion kühlen zu können. Die Drehwelle 16 ist mit einem ersten Potentiometer 28 und einem zweiten Potentiometer 30 drehfest verbunden. Das erste Potentiometer 28 ist mit der Vorderseite 22 der Leiterplatine 20 befestigt, während das zweite Potentiometer 30 mit der Rückseite der Leiterplatine 20 verbunden ist. Das zweite Potentiometer 30 ist innerhalb des Kühlspalts 26 angeordnet. Im dargestellten Ausführungsbeispiel weist der Drehschalter 14 eine radial verlaufende Feder 32 auf, um den Drehschalter in definierten unterschiedlichen Drehpositionen mit Hilfe eines nicht dargestellten Stifts lösbar feststellen zu können.

Wie in Fig. 2 dargestellt, können mit der Leiterplatine mehrere LEDs 34 verbunden sein, um verschiedene Schaltzustände, die einer Winkelstellung des Drehschalters 14 entsprechen, optisch anzeigen zu können. Es ist auch möglich, dass zwei oder mehr LEDs 34 zur Drehachse der Drehwelle 16 im Wesentlichen auf einer radialen Linie angeordnet sind, beispielsweise um durch verschiedenfarbige LEDs 34 verschiedene Schaltstellungen anzeigen zu können. Die LEDs 34 können mit Lichtleitern verbunden sein, um das von den LEDs abgegebene Licht an einer gewünschten Stelle der Drehstelleinheit 10 abstrahlen zu können. Besonders bevorzugt weist der Drehschalter 14 zumindest in einem Teilbereich ein lichtleitendes und/oder zumindest teilweise transparentes Material auf, um das von einer LED 34 abgegebene Licht durch den Drehschalter 14 hindurch scheinen zu lassen. Ferner kann die Vorderseite 22 der Leiterplatine 20 mit den elektronischen Komponenten der Bedienelektronik bestückt sein, die aus Gründen der vereinfachten Darstellung nicht dargestellt sind.

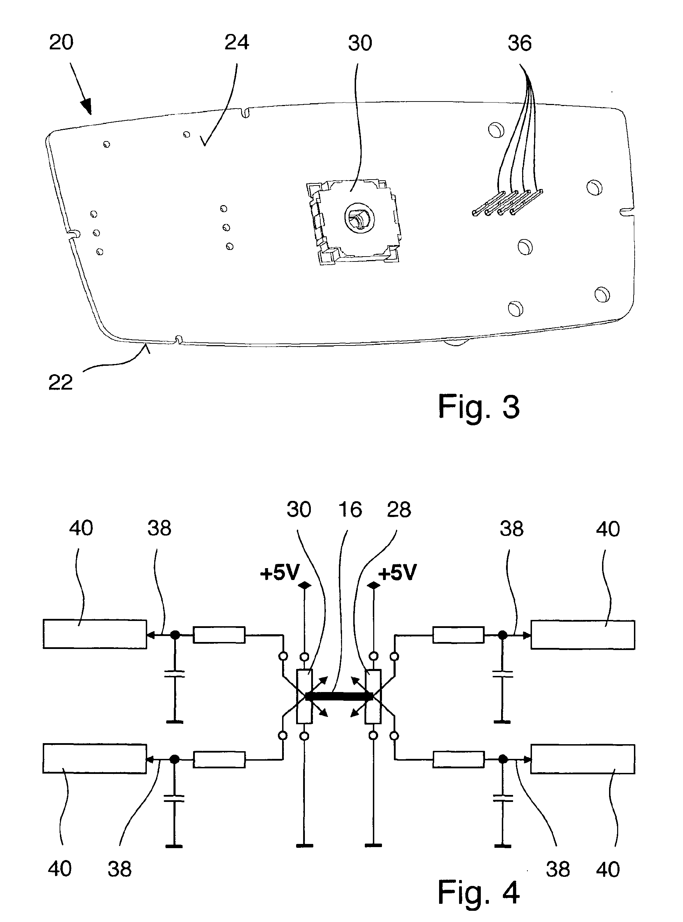

Wie in Fig. 3 dargestellt, kann die Rückseite 24 der Leiterplatine 20 nicht nur mit dem zweiten Potentiometer 30, sondern auch mit beispielsweise vier Anschlusspolen 36 versehen sein. Über die Anschlusspole 36 kann beispielsweise ein elektrischer Strom eingeleitet werden und/oder Signale eingeleitet oder ausgeleitet werden. Ferner ist es möglich, dass die benötigte elektrische Energie von einer mit der Leiterplatine 20 verbundenen Batterie, insbesondere Knopfzelle, bereitgestellt wird.

Wie in Fig. 4 dargestellt, ist das erste Potentiometer 28 mit dem zweiten Potentiometer 30 über die Drehwelle 16 miteinander gekoppelt. Im dargestellten Ausführungsbeispiel weist sowohl das erste Potentiometer 28 als auch das zweite Potentiometer 30 zwei redundante Signalausgänge 38 auf, die jeweils von einem A/D-Wandler 40 in ein digitales Signal umgewandelt werden.

### Bezugszeichenliste

- 10: Drehstelleinheit
- 12: Gehäuse
- 14: Drehschalter
- 16: Drehwelle
- 18: Wellenöffnung
- 20: Leiterplatine
- 22: Vorderseite
- 24: Rückseite
- 26: Kühlspalt
- 28: erster Potentiometer
- 30: zweiter Potentiometer
- 32: Feder
- 34: LED
- 36: Anschlusspol
- 38: Ausgangssignal
- 40: A/D-Wandler

## Patentansprüche

1. Drehstelleinheit zum manuellen Bedienen von Kraftfalhrzeugkomponenten, insbesondere von Kraftfährzeugleuchten, mit
einem mit einer Drehwelle (16) verbundenen drehbaren Drehschalter (14) zum manuellen Drehen,
einer Leiterplatine (20) zur Bereitstellung einer Bedienelektronik, wobei die Leiterplatine (20) eine zum Drehschalter (14) weisende Vorderseite (22) und eine von der Vorderseite (22) wegweisende Rückseite (24) aufweist,
einem mit der Vorderseite (22) der Leiterplatine (20) befestigten ersten Potentiometer (28) zum Messen der Drehstellung der Drehwelle (16) und
einem mit der Rückseite (24) der Leiterplatine (20) befestigten zweiten Potentiometer (30) zum Messen der Drehstellung der Drehwelle (16).

2. Drehstelleinheit nach Anspruch 1 **dadurch gekennzeichnet, dass** das erste Potentiometer (28) relativ zu dem zweiten Potentiometer (30) in Umfangsrichtung der Drehwelle (16) verdreht angeordnet ist, wobei ein Verdrehwinkel α einer Nullstellung des ersten Potentiometers (28) zu einer Nullstellung des zweiten Potentiometers (30) insbesondere 5° ≤ α ≤ 175°, vorzugsweise 30° ≤ α ≤ 160°, weiter bevorzugt 60° ≤ α ≤ 120° und besonders bevorzugt α = 90° ± 10° beträgt.

3. Drehstelleinheit nach Anspruch 1 oder 2 **dadurch gekennzeichnet, dass** das erste Potentiometer (28) und/oder das zweite Potentiometer (30) mindestens zwei unabhängige Messausgänge (38) zur redundanten Messung der Drehstellung der Drehwelle (16) aufweist.

4. Drehstelleinheit nach einem der Ansprüche 1 bis 3 **dadurch gekennzeichnet, dass** der Drehschalter (14) in unterschiedlichen Drehpositionen lösbar feststellbar ist, wobei zwei benachbarte Drehpositionen einen Mindestabstand βₘᵢₙ von insbesondere 10° ≤ βₘᵢₙ≤ 60°, vorzugsweise 15° ≤ βₘᵢₙ ≤ 45° und besonders bevorzugt 20° ≤ βₘᵢₙ ≤ 30° aufweisen.

5. Drehstelleinheit nach einem der Ansprüche 1 bis 4 **dadurch gekennzeichnet, dass** das erste Potentiometer (28) und/oder das zweite Potentiometer (30) mit einem Spiel S in Umfangsrichtung der Drehwelle (16) mit der Drehwelle (16) gekoppelt ist, wobei das Spiels S insbesondere 1°≤ S ≤ 15°, vorzugsweise 2° ≤ S ≤ 12°, weiter bevorzugt 3°≤ S ≤ 9° und besonders bevorzugt 4°≤ S ≤ 7° beträgt.

6. Drehstelleinheit nach einem der Ansprüche 1 bis 5 **dadurch gekennzeichnet, dass** das erste Potentiometer (28) und das zweite Potentiometer (30) mit einer Rechnereinheit zur Bereitstellung einer aktiven Offset-Korrektur verbunden ist.

7. Drehstelleinheit nach einem der Ansprüche 1 bis 6 **dadurch gekennzeichnet, dass** das erste Potentiometer (28) und das zweite Potentiometer (30) als Gleichteile ausgestaltet sind.

8. Drehstelleinheit nach einem der Ansprüche 1 bis 7 **dadurch gekennzeichnet, dass** die Leiterplatine (20) eine Wellenöffnung (18) zum Hindurchführen der Drehwelle (16) aufweist, wobei die Wellenöffnung (18) im Wesentlichen im Flächenschwerpunkt der Vorderseite (22) der Leiterplatine (20) vorgesehen ist.

9. Drehstelleinheit nach einem der Ansprüche 1 bis 8 **dadurch gekennzeichnet, dass** die Drehwelle (16) in axialer Richtung relativ zum ersten Potentiometer (28) und/oder zum zweiten Potentiometer (30) bewegbar mit dem ersten Potentiometer (28) und/oder mit dem zweiten Potentiometer (30) gekoppelt ist.

10. Drehstelleinheit nach einem der Ansprüche 1 bis 9 **dadurch gekennzeichnet, dass** die Ausgangssignale des ersten Potentiometers (28) und/oder des zweiten Potentiometers (30) mit Hilfe eines A/D-Wandlers (40) mit maximal 10 Bit, insbesondere mit maximal 9 Bit, vorzugsweise mit maximal 8 Bit und besonders bevorzugt mit maximal 7 Bit codierbar sind.

## Claims

1. A rotary actuator for the manual operation of motor vehicle components, in particular of motor vehicle lights, with
a rotatable rotary switch (14), connected with a rotary shaft (16), for manual rotation,
a printed circuit board (20) for providing operating electronics, wherein the printed circuit board (20) has a front side (22) pointing towards the rotary switch (14) and a rear side (24) pointing away from the front side (22),
a first potentiometer (28), fastened to the front side (22) of the printed circuit board (20), for measuring the rotational position of the rotary shaft (16) and
a second potentiometer (30), fastened to the rear side (24) of the printed circuit board (20), for measuring the rotational position of the rotary shaft (16).

2. The rotary actuator according to Claim 1, **characterized in that** the first potentiometer (28) is arranged twisted relative to the second potentiometer (30) in circumferential direction of the rotary shaft (16), wherein a torsion angle α of a zero position of the first potentiometer (28) to a zero position of the second potentiometer (30) is in particular 5° ≤ α ≤ 175°, preferably 30° ≤ α ≤ 160°, more preferably 60° ≤ α ≤ 120° and particularly preferably α = 90° ± 10°.

3. The rotary actuator according to Claim 1 or 2, **characterized in that** the first potentiometer (28) and/or the second potentiometer (30) has at least two independent measurement outputs (38) for the redundant measurement of the rotational position of the rotary shaft (16).

4. The rotary actuator according to one of Claims 1 to 3, **characterized in that** the rotary switch (14) is able to be releasably secured in various rotational positions, wherein two adjacent rotational positions have a minimum distance βₘᵢₙ of in particular 10° ≤ βₘᵢₙ ≤ 60°, preferably 15° ≤ βₘᵢₙ ≤ 45° and particularly preferably 20° ≤ βₘᵢₙ ≤ 30°.

5. The rotary actuator according to one of Claims 1 to 4, **characterized in that** the first potentiometer (28) and/or the second potentiometer (30) is coupled with the rotary shaft (16) with a play S in circumferential direction of the rotary shaft (16), wherein the play S is in particular 1° ≤ S ≤ 15°, preferably 2° ≤ S ≤ 12°, more preferably 3° ≤ S ≤ 9° and particularly preferably 4° ≤ S ≤ 7°.

6. The rotary actuator according to one of Claims 1 to 5, **characterized in that** the first potentiometer (28) and the second potentiometer (30) is connected with a processor unit for the provision of an active offset correction.

7. The rotary actuator according to one of Claims 1 to 6, **characterized in that** the first potentiometer (28) and the second potentiometer (30) are configured as identical parts.

8. The rotary actuator according to one of Claims 1 to 7, **characterized in that** the printed circuit board (20) has a shaft opening (18) for the guiding through of the rotary shaft (16), wherein the shaft opening (18) is provided substantially in the centre of area of the front side (22) of the printed circuit board (20).

9. The rotary actuator according to one of Claims 1 to 8, **characterized in that** the rotary shaft (16) is coupled with the first potentiometer (28) and/or with the second potentiometer (30) so as to be movable in axial direction relative to the first potentiometer (28) and/or to the second potentiometer (30).

10. The rotary actuator according to one of Claims 1 to 9, **characterized in that** the output signals of the first potentiometer (28) and/or of the second potentiometer (30) are able to be encoded with the aid of an A/D converter (40) of a maximum 10 bit, in particular maximum 9 bit, preferably maximum 8 bit and particularly preferably maximum 7 bit.

## Revendications

1. Système d'actionneur rotatif pour commander manuellement des composants automobiles, en particulier des éclairages automobiles avec
un commutateur rotatif (14) pivotable relié à un arbre rotatif (16) pour une rotation manuelle,
une platine de circuit imprimé (20) pour mise à disposition d'un système électronique de commande, la platine de circuit imprimé (20) présentant une face avant (22) dirigée vers le commutateur rotatif (14) et une face arrière (24) s'éloignant de la face avant (22),
un premier potentiomètre (28) fixé avec la face avant (22) de la platine de circuit imprimé (20) pour mesurer la position de rotation de l'arbre rotatif (16) et
un deuxième potentiomètre (30) fixé avec la face arrière (24) de la platine de circuit imprimé (20) pour mesurer la position de rotation de l'arbre rotatif (16).

2. Système d'actionneur rotatif selon la revendication 1, **caractérisé en ce que** le premier potentiomètre (28) est disposé décalé par rapport au deuxième potentiomètre (30) dans le sens périphérique de l'arbre rotatif (16), un angle de torsion α d'une position zéro du premier potentiomètre (28) par rapport à une position zéro du deuxième potentiomètre (30) étant en particulier de 5° ≤ α ≤ 175°, de préférence de 30° ≤ α ≤ 160°, de façon encore plus préférée de 60° ≤ α ≤ 120° et en particulier de préférence de α = 90 ± 10°.

3. Système d'actionneur rotatif selon la revendication 1 ou 2, **caractérisé en ce que** le premier potentiomètre (28) et/ou le deuxième potentiomètre (30) présente au moins deux sorties de mesure (38) indépendantes pour une mesure redondante de la position de rotation de l'arbre rotatif (16).

4. Système d'actionneur rotatif selon une quelconque des revendications 1 à 3, **caractérisé en ce que** le commutateur rotatif (14) est blocable de façon mobile dans différentes positions de rotation, les deux positions de rotation voisines présentant un intervalle minimum βₘᵢₙ en particulier de 10° ≤ βₘᵢₙ ≤ 60°, de préférence 15° ≤ βₘᵢₙ ≤ 45° et en particulier de préférence de 20° ≤ βₘᵢₙ ≤ 30°.

5. Système d'actionneur rotatif selon une quelconque des revendications 1 à 4, **caractérisé en ce que** le premier potentiomètre (28) et/ou le deuxième potentiomètre (30) est couplé avec un jeu S dans le sens périphérique de l'arbre rotatif (16) avec l'arbre rotatif (16), le jeu S étant en particulier de 1° ≤ S ≤ 15°, de préférence de 2° ≤ S ≤ 12°, de façon encore plus préférée de 3° ≤ S ≤ 9°, en particulier de préférence 4° ≤ S ≤ 7°.

6. Système d'actionneur rotatif selon une quelconque des revendications 1 à 5, **caractérisé en ce que** le premier potentiomètre (28) et le deuxième potentiomètre (30) sont reliés à un calculateur pour la mise à disposition d'une correction de décalage active.

7. Système d'actionneur rotatif selon une quelconque des revendications 1 à 6, **caractérisé en ce que** le premier potentiomètre (28) et le deuxième potentiomètre (30) sont constitués comme des pièces analogues.

8. Système d'actionneur rotatif selon une quelconque des revendications 1 à 7, **caractérisé en ce que** la platine de circuit imprimé (20) présente une ouverture d'arbre (18) pour faire passer à travers l'arbre rotatif (16), l'ouverture d'arbre (18) étant prévue pour l'essentiel au centre de gravité de surface de la face avant (22) de la platine de circuit imprimé (20).

9. Système d'actionneur rotatif selon une quelconque des revendications 1 à 8, **caractérisé en ce que** l'arbre de rotation (16) est couplé dans le sens axial par rapport au premier potentiomètre (28) et/ou au deuxième potentiomètre (30) de façon mobile avec le premier potentiomètre (28) et/ou avec le deuxième potentiomètre (30).

10. Système d'actionneur rotatif selon une quelconque des revendications 1 à 9, **caractérisé en ce que** les signaux de sortie du premier potentiomètre (28) et/ou du deuxième potentiomètre (30) peuvent être codées à l'aide d'un convertisseur analogique-numérique (40) avec une maximum de 10 bits, en particulier avec un maximum de 9 bits, de préférence avec un maximum de 8 bits et en particulier de préférence avec un maximum de 7 bits.
